Europäisches Patentamt

(19) European Patent Office

Office européen des brevets

(11) Publication number: **0 020 763**
**B1**

(12) **EUROPEAN PATENT SPECIFICATION**

(45) Date of publication of patent specification: **29.09.82**

(51) Int. Cl.³: **B 60 S 1/28, B 60 S 1/38**

(21) Application number: **80900976.4**

(22) Date of filing: **04.12.79**

(86) International application number:
**PCT/GB79/00206**

(87) International publication number:
**WO 80/01155 12.06.80 Gazette 80/13**

(54) A device for use in a windscreen wiper installation.

(30) Priority: **06.12.78 GB 4740378**

(43) Date of publication of application:
**07.01.81 Bulletin 81/1**

(45) Publication of the grant of the patent:
**29.09.82 Bulletin 82/39**

(84) Designated Contracting States:
**FR**

(56) References cited:
**US - A - 3 138 816**
**US - A - 3 631 561**
**US - A - 3 638 274**

(73) Proprietor: **TRICO-FOLBERTH LIMITED**
**Great West Road**
**Brentford, Middlesex, TW8 9HP (GB)**

(72) Inventor: **Frimley, Charles, Henry**
**25 Redford Road**
**Windsor, Berkshire (GB)**

(74) Representative: **Gordon, Michael Vincent**
**Gill Jennings & Every 53 to 64 Chancery Lane**
**London, WC2A 1HN (GB)**

Courier Press, Leamington Spa, England.

A device for use in a windscreen wiper installation

The present invention relates to a device for use in a windscreen wiper installation.

The usual type of windscreen wiper installation comprises a wiper shaft which can be oscillated by a motor, a wiper arm extending radially from the shaft, and a wiper unit attached to the end of the wiper arm remote from the shaft. Means are provided for urging the wiper arm towards an associated windscreen. Operation of the motor causes the wiper unit to move to and fro in a succession of cycles so that a wiper blade forming part of the wiper unit can wipe an arcuate area of the windscreen.

A device for use in a windscreen wiper installation including a windscreen, a wiper shaft which can be oscillated by a motor, and a wiper arm which extends radially from the shaft, is urged towards the windscreen and is attached at its end remote from the shaft to a wiper blade unit, has been proposed in prior United States patent specification 3 638 274. That device comprises a member in association with jacking means attachable to oscillate with the wiper arm and the wiper blade unit, the jacking means comprising two parts capable of relative movement towards and away from the windscreen with one of said parts carrying the member, there being actuating means for operating the jacking means to move the member between an inoperative position in which there is clearance between the member and the windscreen and in which the wiper blade unit contacts the windscreen, and an operative position in which the member contacts the windscreen. In said United States patent specification 3 638 274, the member proposed is a hard plastics scraper blade and the jacking means proposed is controlled by a hand-operated cable.

It is also known from prior German Offenlegungsschrift 2 619 633, that a brush can be moved manually between positions in which either just the wiper blade is in contact with the windscreen, or both the wiper blade and the brush are in contact with the windscreen.

The purpose of both the scraper blade and the brush is to help remove debris from the windscreen which is not sufficiently removed by the wiper blade alone.

A particular disadvantage of these known arrangements, however, is that their wiper blades (one by the side of the brush in the German publication and two sandwiching the scraper blade in the United States publication) clear water from the windscreen which might have assisted in the removal of debris from the windscreen, and their wiper blades in association with the scraper blade or the brush might trap therebetween debris which had been successfully loosened from the windscreen.

There is another disadvantage with which the known arrangements do not deal. In a typical windscreen wiper installation, in which the windscreen is inclined upwards and rearwards, and the wiper shaft is below the windscreen, the wiper blade inclines progressively nearer the horizontal on nearing the end of each wiping stroke. When the wiper blade is working to clear water from the windscreen there is an accumulation of water in front of the wiper blade which is confined against the wiper blade by air flow upwards over the windscreen. Upon reversal of the movement of the wiper blade, there is a tendency from some of the water accumulation to follow the wiper blade, thus obscuring the portion of the windscreen which has just been wiped.

An object of the present invention is to deal with these two disadvantages.

The present invention is characterised in that the jacking means has an ability to lift through a distance which exceeds the clearance existing between the member when in the inoperative position and the windscreen so that when the member is in the operative position the wiper blade unit is out of contact with the windscreen.

In one embodiment of the invention, which deals with both of the disadvantages mentioned above, the actuating means for operating the jacking means is either operable to maintain the member in contact with the windscreen and the wiper blade unit out of contact with the windscreen, or is alternatively operable by responding to a cam carried by the wiper shaft of the installation to cause intermittent operation of the jacking means so that the wiper blade unit is lifted out of contact with the windscreen and returned thereto at least once during each complete cycle of operation (i.e. oscillation) of a wiper arm.

There are two circumstances in which the present invention is of particular value.

In one circumstance, the member is selectively brought into engagement with the windscreen instead of the wiper blade, and when in the form of a brush then serves to remove debris (notably insect debris) which a wiper blade does not satisfactorily remove.

In the other circumstance, whether the member is a brush or otherwise the wiper blade is selectively lifted out of contact with the windscreen, such as at wiper stroke reversal, thus permitting water which would otherwise have tended to accumulate on a certain portion of the windscreen, under the combined effect of the movement of the wiper blade and the flow of air relatively to the windscreen, to pass under the wiper blade before the wiper blade is lowered to remove that water.

In both of these circumstances, the member should be capable of making sliding or rolling engagement with the windscreen without marking the windscreen, but the form that the member takes may be influenced, in particular applications, by which of those circumstances is the more important.

The member may, for example, be a brush having tufts of natural or synthetic relatively long stiff bristles secured to a backing strip, or be a pad formed of a plastics material to present a regular array of relatively short protrusions, or be an elastomeric roller rotatable on an axis generally parallel to the wiper blade. One preferred form of the member consists of a rigid backing strip which supports a scrubbing element, the scrubbing element having a body which is resilient to a substantial extent in a direction to and from the backing strip, and the body carrying a working facing on which are numerous scrubbing projections. It has been found that certain materials which are suitable for the working facing are commercially available under the name "Velcro" (Registered Trade Mark) from Selectus Ltd., of Stoke-on-Trent, England.

The member is preferably of equivalent length to the wiper blade, and is preferably arranged to be generally parallel to the wiper blade, but there may be more than one such member, and the members spaced apart from one another in a direction parallel to the wiper blade, particularly if the main purpose of the members is merely to lift the wiper blade, in which case the members may be operated by their own individual jacking means, or may be linked together for operation by a common jacking means.

It will be apparent that, in any installation according to the present invention, the jacking means may be single-acting or double-acting, and may be operated hydraulically, for example by water from a windscreen washer system, or pneumatically, or may be operated by a solenoid with suitable control switches.

The jacking means is preferably a single-acting fluid-actuated jack, with spring return, in which case said two parts of the jacking means capable of relative movement towards and away from the windscreen are a piston, and a cylinder within which the piston reciprocates, the stroke of the piston and thereby the lift of the jack being greater than the clearance existing between the member when in the inoperative position and the windscreen.

Although this invention has been particularly developed in relation to heavy duty wipers, such as are installed on the cabs of railway vehicles, and of large road vehicles, it is applicable to vehicles in general, regardless of the size of their windscreens and whether the windscreens are flat or curved.

Examples of several embodiments of the present invention will now be described with reference to the accompanying drawings, in which:—

Figure 1 is a plan view of a windscreen wiper installation in accordance with the present invention;

Figure 2 is a side elevation in the direction of the arrow II in Figure 1;

Figure 3 is a cross-section on the line III—III in Figure 2;

Figure 4 is an end elevation, seen in the direction of Figure 3, showing the member in action with the wiper blade raised; and

Figures 5 to 7 are all fragmentary perspective views of alternative forms for the member.

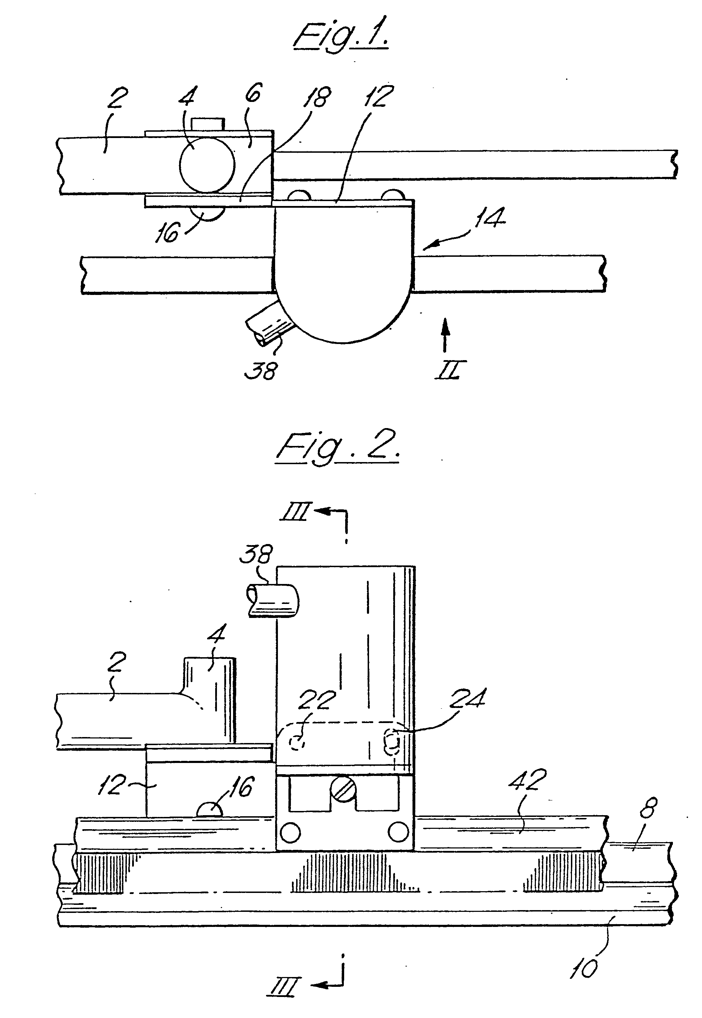

Referring to Figures 1 to 4, a windscreen wiper installation is shown for use in conjunction with a flat windscreen on the cab of a railway vehicle. Only the outer end is shown of a wiper arm 2, whose other end is secured to a wiper shaft (not shown) adapted to be oscillated by a motor. Said outer end of the wiper arm 2 terminates in a boss 4 to which is fixed a holder or clip 6. Into this clip 6 is fitted a backing strip 8 of a wiper unit, which includes a wiper blade 10 carried by the strip 8. The wiper blade 10 is urged towards the windscreen by a wiper arm spring (also not shown) the loading of which is pre-stressed.

The components so far described can be those currently in use. The installation is modified, in accordance with the present invention, by the following further components.

A plate 12 serves as a means of mounting a jack 14 on the clip 6. The plate 12 is secured to the clip 6 by a single bolt 16, and has a lip 18 which fits the contour of the clip to prevent rocking. The jack 14 has a housing 20 which is secured to the plate 12 by two screws 22, the right-hand screw 22 (as shown in Figure 2) passing through an elongate slot 24 in the plate 12, for adjustment as described below.

The housing 20 defines a cylinder 26 which is closed at its lower end by a cover 28. In the example shown, the jack 14 is a pneumatically-actuated single-acting jack, with spring return. A piston rod 30 passes through the cover 28, and carries a piston 32 with a sealing ring 34. The return spring is a coil spring 37 confined between the piston 32 and the cover 28.

The upper end of the cylinder 26 is connected by a passage 36 to a hose 38, through which air can be supplied and exhausted, as described below.

Attached to the lower end of the piston rod 30 is a block 40, to which in turn is attached a backing strip 42 of an elongate brush 44 with stiff bristles.

The normal condition of the jack 14 is as shown in Figures 1, 2 and 3, that is to say with the piston 32 and brush 44 in an uppermost position. There is then clearance 46 between the brush 44 and windscreen surface 48. This clearance 46 is however a shorter distance than the stroke of the piston 32.

In this normal condition, the wiper blade 10 is in engagement with the windscreen surface 48. Oscillation of the wiper arm 2 in the normal manner by a wiper shaft will cause the wiper blade 10 to wipe the screen in the normal manner. Whenever there is a desire to remove debris which has not been removed by the wiper blade, a person driving the vehicle can cause compressed air to be admitted via the hose 38 to the upper end of the cylinder 26. This causes downward movement (as seen in Figures 2, 3 and 4) of the brush 44 until the brush 44 engages the windscreen surface 48, followed by upward movement of the housing 20 carrying with it the wiper arm 2 and the wiper blade 10. Consequently, there is then clearance at 49 between the wiper blade 10 and the windscreen surface 48.

In practice, the operation of the jack in this way should be associated with operation of a windscreen washer. The windscreen washer may be of the type with fixed jets, or of the type with jets carried by the wiper arm, or be capable of delivering water through a perforated pipe extending along the length of the brush. A few cycles of movement of brush 44 by the wiper arm should be sufficient to dislodge debris.

Release of compressed air from the upper end of the cylinder 26 via the hose 38 enables the condition of Figures 1, 2 and 3 to be quickly restored by the action of the return spring 37. Thereupon the first cycle of operation of the wiper blade 10 will remove water and the traces of debris, leaving a clear view.

In order to obtain a uniform action of the brush 44 along its length, it is desirable for the clearance 46 to be of uniform extent throughout its length in the normal condition of Figures 1, 2 and 3. The slot 24 in the plate 12 to accommodate one of the screws 22 permits adjustment to be made to achieve this uniform clearance. That is to say, the slot 24 in the plate 12 permits the brush 44 to be adjustably securable about an axis at right angles to the line of action of the jack 14 so that the brush 44 can be secured to lie parallel to the windscreen surface 48.

If, at the end of a stroke, one end of the brush should encounter the rim of a windscreen, the piston rod 30 can pivot slightly around its own axis, thus allowing that end of the brush to approach the wiper blacking strip 8. This means that installation of the jack 14 and the brush 44 does not necessitate any adjustment in the normal length of stroke of the wiper installation. It will be appreciated that the axis of the pivot rod 30 is coincident with the line of action of the jack 14.

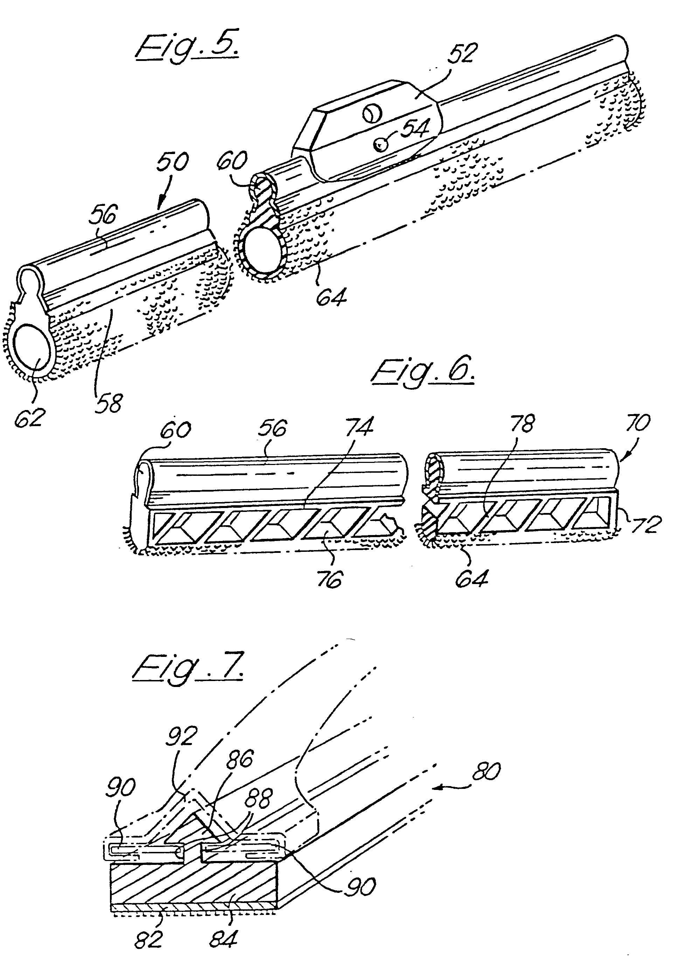

A particularly preferred form of the member is not the brush 44 shown in Figures 1 to 4 but a brush 50 as shown in Figure 5.

The brush 50 includes a clip 52 securable by a releasable fastening to the lower end of the piston rod of the above-described jack or to any other appropriate jacking means. The clip 52 is fastened by a rivet 54 to a backing strip 56. This backing strip is of metal, of uniform cross-section, in the general form of an inverted channel, with a somewhat contracted mouth.

Body 58 of the brush is an extrusion of rubber, in the form of a resilient tube with an integral upwardly-extending flange 60. This flange is gripped in the backing strip 56. The body 58 is cut to the required length, and the two ends 62 of the tube are open. Around the exposed lower part of the tube, and trapped in position by the contracted mouth of the backing strip 56 is a facing material 64. The preferred facing material is known as "type 4 hookless Velcro" (Registered Trade Mark). The surface appearance in the drawing is purely symbolic. In fact the surface resembles a forest of a very large number of small, bristle-like projections from a flexible strip. The facing material 64 has little affect on the resilience of brush 50 as a whole.

When brush 50 is in its operative position under pressure exerted by the wiper arm, the resilience of the brush enables contact to be made with the windscreen by the whole length of the brush, which is advantageous. Such complete contact is difficult to achieve with the stiff bristle brush 44 even on a flat windscreen.

The resilience of brush 50 is attributable to the tubular nature of the body 58 in conjunction with the grade of rubber of which it is made. In consequence, throughout the oscillation of the brush 50 by the wiper arm, the working facing engages the windscreen with a force lying within a range which will give rise to a scrubbing action and the consequent dislodging of debris, particularly insect debris.

The scrubbing action is enhanced by the presence of water on the windscreen. This may be applied by a spray, and spread by the wiper blade, brush 50 being held clear of the windscreen by the jacking means. Afterwards, the jacking means is operated to bring brush 50 into contact with the windscreen to perform a scrubbing action during wiper arm operation.

In brush 70 shown in Figure 6, the tubular body is replaced by a body 72 which is a moulding of rubber. It includes an upper strip 74 and a lower strip 76, linked together by a plurality of inclined webs 78. These webs 78 render the body resilient to a substantial extent in a direction to and from the backing strip 56. The upper strip 74 carries a flange 60, which is gripped by the backing strip 56. The lower strip 76 is semi-circular in cross-section, with its curved surface downwards, and the working facing 64 is secured by adhesive to this semicylindrical surface.

The brushes 44, 50 and 70 so far described have all been primarily intended for use in association with flat windscreens. The present invention may also be utilised however with curved windscreens. To suit a curved windscreen, the back of the brush should be arched perceptibly along its length in the manner of a comparable wiper blade, and have resilience in the plane of the arch and stiffness at right angles to that plane, or be supported by a conventional harness to impart such arch form, resilience and lateral stiffness.

A member 80 which is suitable for use in association with a curved windscreen is shown schematically in Figure 7.

The member 80 includes a facing 82 of the above-mentioned "type 4 hookless Velcro" (Registered Trade Mark), the facing 82 being secured by adhesive to the lower face of an elongate pad 84 of neoprene, whose upper face is formed with an upstanding flange 86 having a pair of opposed longitudinally extending grooves 88. Longitudinally spaced pairs of opposed fingers 90 (only one pair being shown), constituting vertebra and being carried by a conventional harness 92, enter the grooves 88 to impart the required resilient arch form and lateral stiffness to the member 80.

For situations in which it is desired to permit water to pass between the wiper blade and the windscreen, any of the above-described brushes may be used, as the water can leak past their bristles or scrubbing projections even when they contact the windscreen, and they can slide on the windscreen without scratching, and furthermore they are not likely to accumulate grit which might scratch the windscreen.

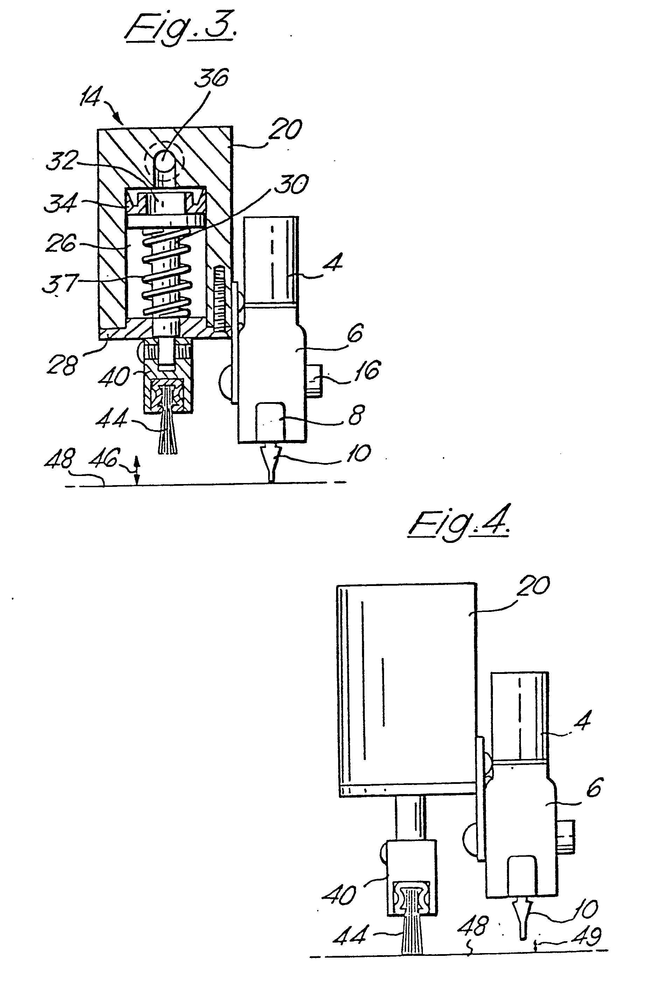

The purpose of the jacking means is then to raise the wiper blade 10 away from the windscreen, thus providing a clearance such as the clearance 49 shown in Figure 4, at suitable moments during operation.

Preferably, in this case, the supply of compressed air via the hose 38 to the top of the cylinder 26 is under automatic control, in association with the operation of the motor which imparts oscillating motion to the wiper shaft carrying the wiper arm 2.

It has been found that, where a windscreen is inclined upwards and rearwards, and a wiper shaft is below the windscreen, then, during the parts of its cycle during which the wiper blade is approaching an end of a stroke, this being a condition in which the length of the wiper blade is becoming progressively nearer the horizontal, the wiper blade tends to push ahead of it a quantity of water which has accumulated and is confined against the wiper blade by the air flow upwards over the windscreen, and upon reversal of the movement of the wiper blade at the end of its stroke, this water follows the wiper blade, thus obscuring the portion of the windscreen which has just been wiped.

We have found that if the wiper blade is raised from the windscreen for a short angular distance as the blade is approaching the end of a stroke at least on the driver's side of the vehicle, then the air flow due to forward motion of the vehicle causes the water to pass under the wiper blade, whereupon, if the wiper blade is then returned to contact the windscreen, and then performs its next stroke, it carries away water accumulation from the area which hitherto tended to be obscured.

For the purpose of clearing away this water accumulation as aforesaid, once in each complete cycle of operation of the wiper arm, the wiper shaft may carry a cam which cooperates with a pawl to operate a valve controlling admission and release of compressed air to the hose 38 leading to the jack 14. By this means, the jack is actuated as the wiper blade is approaching the end of a stroke, say 15° before the end, and the jack is released a few degrees before or at or a few degrees after completion of the wiper blade stroke. If it is desired to clear away water accumulation twice in each cycle of the wiper arm operation, at say opposite ends of each stroke, a second pawl is also arranged suitably to cooperate with the cam and the valve.

Such operations to clear away water accumulation occur throughout the operation of the wiper arm, that is to say both under conditions of rain, and under conditions of the use of a windscreen washer to remove debris of the kind which can be cleared away by the wiper blade in conjunction with washing water.

## Claims

1. A device for use in a windscreen wiper installation including a windscreen (48), a wiper shaft which can be oscillated by a motor, and a wiper arm (2) which extends radially from the shaft, is urged towards the windscreen and is attached at its end remote from the shaft to a wiper blade unit, (8, 10), the device comprising a member (44; 50; 70; 80) in association with jacking means (14) attachable to oscillate with the wiper arm and the wiper blade unit, the jacking means comprising two parts (20, 28; 30, 32) capable of relative movement towards and away from the windscreen with one of said parts (30, 32) carrying the member, there being actuating means (36, 37) for operating the jacking means to move the member between an inoperative position in which there is clearance (46) between the member and the windscreen and in which the wiper blade unit contacts the windscreen, and an operative position in which the member contacts the windscreen, characterised in that the jacking means (14) has an ability to lift through a distance (46 + 49) which exceeds the clearance (46) existing between the member (44; 50; 70; 80) when in the inoperative position and the windscreen (48) so that when the member is in the operative position the wiper blade unit (8, 10) is out of contact with the windscreen.

2. A device according to claim 1, characterised in that the jacking means includes a housing (20) which is secured to a holder (6) capable of attaching a wiper blade unit to a wiper arm (2).

3. A device according to claim 1 or claim 2, characterised in that the jacking means carries the member on an axis at right angles to the direction in which the jacking means can lift, the member being adjustable about said axis and being securable to lie parallel to a windscreen.

4. A device according to any preceding claim, characterised in that the member can pivot about an axis coincident with the direction in which the jacking means can lift.

5. A device according to any preceding claim, characterised in that the jacking means is a single-acting fluid-actuated jack, with a spring return (37).

6. A device according to any one of claims 1 to 5, in which the member is a brush as is known, characterised in that the bristles or bristle-like projections of the brush support the wiper blade unit out of contact with a windscreen when the brush is in the operative position.

7. A device according to any one of claims 1 to 5, characterised in that the member is in the form of a pad (84) and presents a large surface area for contacting a windscreen.

8. A device according to any one of claims 1 to 5, characterised in that the member is in the form of a roller and presents a surface for rolling over a windscreen.

9. A device according to any preceding claim, characterised in that the actuating means is adapted to respond to a cam carried by a wiper shaft to cause intermittent operation of the jacking means so that a wiper blade unit is lifted out of contact with a windscreen and returned thereto at least once during each complete oscillation of a wiper arm.

10. A device according to any preceding claim when forming part of a windscreen wiper installation including a windscreen, a wiper shaft which can be oscillated by a motor, and a wiper arm which extends radially from the shaft, is urged towards the windscreen and is attached at its end remote from the shaft to a wiper blade unit.

**Revendications**

1. Dispositif destiné à être utilisé dans une installation d'essuie-glace comprenant un pare-brise (48), un arbre d'essuie-glace qui peut être mis en mouvement oscillant par un moteur, et un bras d'essuie-glace (2) qui part radialement de l'arbre, est poussé vers le pare-brise et est attaché, à son extrémité éloignée de l'arbre à un balai d'essuie-glace (8, 10), le dispositif comprenant un élément (44; 50; 70; 80) associé à des moyens de poussée (14) susceptibles d'être attachés de façon à osciller avec le bras d'essuie-glace et avec le balai d'essuie-glace, les moyens de soulèvement comprenant deux parties (20, 28; 30, 32) capables de déplacements relatifs vers le pare-brise, ou en direction opposée, l'une de ces parties (30, 32) portant l'élément, cependant qu'il comprend des moyens d'actionnement (36, 37) pour actionner les moyens de poussée afin de déplacer l'élément entre une position inactive dans laquelle il existe un espace libre (46) entre l'élément et le pare-brise et le balai d'essuie- glace est en contact avec le pare-brise, et une position active dans laquelle l'élément est en contact avec le pare-brise, caractérisé en ce que les moyens de poussée (14) sont capables de soulever d'une distance (46 + 49) qui est supérieure à l'espace libre (46) existant entre l'élément (44; 50; 70; 80), lorsqu'il est dans la position inactive, et le pare-brise (48) de sorte que, lorsque l'élément est dans la position active, le balai d'essuie-glace (8, 10) est hors de contact avec le pare-brise.

2. Dispositif suivant la revendication 1, caractérisé en ce que les moyens de soulèvement comprennent un boîtier (20) qui est fixé à un support (6) capable de fixer un balai d'essuie-glace à un bras d'essuie-glace (2).

3. Dispositif suivant la revendication 1 ou la revendication 2, caractérisé en ce que les moyens de soulèvement portent l'élément sur un axe faisant un angle droit avec la direction dans laquelle les moyens de soulèvement peuvent soulever, l'élément étant réglable autour de cet axe et pouvant être fixé de façon à s'étendre parallèlement aux pare-brise.

4. Dispositif suivant l'une des revendications précédentes, caractérisé en ce que l'élément peut pivoter autour d'un axe qui coïncide avec la direction dans laquelle des moyens de soulèvement peuvent soulever.

5. Dispositif suivant l'une des revendications précédentes, caractérisé en ce que les moyens de soulèvement sont un vérin à simple effet actionné par fluide, avec rappel par ressort (37).

6. Dispositif suivant l'une des revendications 1 à 5, dans lequel l'élément est une brosse, ainsi qu'il est connu en soi, caractérisé en ce que les soies ou saillies en forme de soies de la brosse supportent le balai d'essuie-glace hors du contact avec un pare-brise lorsque la brosse est dans la position active.

7. Dispositif suivant l'une des revendications 1 à 5, caractérisé en ce que l'élément a la forme d'un tampon (84) et présente une grande surface de contact avec un pare-brise.

8. Dispositif suivant l'une des revendications 1 à 5, caractérisé en ce que l'élément a la forme d'un rouleau et présente une surface de roulement sur un pare-brise.

9. Dispositif suivant l'une des revendications précédentes, caractérisé en ce que les moyens d'actionnement sont adaptés pour répondre à une came portée par un arbre d'essuie-glace afin de provoquer une manoeuvre intermittente des moyens de soulèvement de sorte qu'un balai d'essuie-glace est soulevé hors de contact avec le pare-brise et ramené contre ce pare-brise au moins une fois pendant chaque oscillation complète d'un bras d'essuie-glace.

10. Dispositif suivant l'une des revendications précédentes, lorsqu'il fait partie d'une installation d'essuie-glace comprenant un pare-brise, un arbre d'essuie-glace qui peut être mis en mouvement d'oscillation par un moteur et un bras d'essuie-glace qui part radialement de l'arbre, est poussé vers le pare-brise et est fixé à son extrémité la plus éloignée de l'arbre à un balai d'essuie-glace.

**Patentansprüche**

1. Einrichtung zur Verwendung in einer Scheibenwischerauflage, die eine Windschutzscheibe (48), eine durch einen Motor hin- und herdrehbare Wischerwell sowie einen Wischerarm (2) umfaßt, der sich radial ·von der Welle erstreckt, gegen die Windschutzscheibe gedrückt wird und an seinem von der Welle entfernt liegenden Ende mit einer Wischblatteinheit (8, 10) verbunden ist, wobei die Einrichtung einen Teil (44; 50; 70; 80) umfaßt, dem eine Aufbockeinrichtung (14) zugeordnet und derart befestigt ist, um mit dem Wischerarm und der Wischblatteinheit eine hin- und hergehende Drehbewegung zu vollziehen, wobei die Aufbockeinrichtung zwei in Richtung auf die Windschutzscheibe und in der Gegenrichtung relativ bewegbare Teile (20, 28; 30, 32) umfaßt, wobei einer dieser Teile (30, 32) den Teil trägt und wobei eine Betätigungseinrichtung (36, 37) vorhanden ist, um die Aufbockeinrichtung in Betrieb zu setzen, so daß sie den Teil zwischen einer Ruhestellung, in der ein Luftspalt (46) zwischen dem Teil und der Windschutzscheibe vorhanden ist und in der die Wischblatteinheit auf der Windschutzscheibe aufliegt, und einer Stellung, in der der Teil auf der Windschutzscheibe aufliegt, verschiebt, dadurch gekennzeichnet, daß die Aufbockeinrichtung (14) zu einer Anhebebewegung über eine Entfernung (46 + 49) in der Lage ist, die größer ist als der Luftspalt (46), der zwischen dem sich in der Ruhestellung befindlichen Teil (44; 50; 70; 80) und der Windschutzscheibe (48) vorliegt, so daß die Wischblatteinheit (8, 10) die Windschutzscheibe nicht berührt, wenn der Teil sich in der Arbeitsstellung befindet.

2. Einrichtung nach Anspruch 1, dadurch gekennzeichnet, daß die Aufbockeinrichtung ein Gehäuse (20) umfaßt, das an einem Halter (6) befestigt ist, mit dem die Wischblatteinheit am Wischerarm (2) befestigbar ist.

3. Einrichtung nach Anspruch 1 oder 2, dadurch gekennzeichnet, daß die Aufbockeinrichtung den Teil auf einer Achse trägt, die senkrecht zu der Richtung der Hubbewegung der Aufbockeinrichtung liegt, wobei der Teil um diese Achse justierbar und in einer Lage parallel zu einer Windschutzscheibe befestigbar ist.

4. Einrichtung nach einem der vorhergehenden Ansprüche, dadurch gekennzeichnet, daß der Teil um eine Achse schwenkbar ist, die mit der Richtung zusammenfällt, in der die Aufbockeinrichtung die Hubbewegung ausführen kann.

5. Einrichtung nach einem der vorhergehenden Ansprüche, dadurch gekennzeichnet, daß die Aufbockeinrichtung eine einfach wirkende, hydraulische Anhebevorrichtung mit einer Rückholfeder (37) ist.

6. Einrichtung nach einem der Ansprüche 1—5, bei der der Teil als an sich bekannte Bürste ausgebildet ist, dadurch gekennzeichnet, daß die Borsten oder borstenähnlichen Vorsprünge der Bürste die Wischblatteinheit außer Berührung mit der Windschutzscheibe halten, wenn sich die Bürste in ihrer Arbeitsstellung befindet.

7. Einrichtung nach einem der Ansprüche 1—5, dadurch gekennzeichnet, daß der Teil als Kissen (84) ausgebildet ist und großflächig auf der Windschutzscheibe aufliegt.

8. Einrichtung nach einem der Ansprüche 1—5, dadurch gekennzeichnet, daß der Teil als Walze ausgebildet ist und eine Oberfläche zum Rollen über eine Windschutzscheibe aufweist.

9. Einrichtung nach einem der vorhergehenden Ansprüche, dadurch gekennzeichnet, daß die Betätigungseinrichtung von einer Steuerkurve steuerbar ist, die von einer Wischerwelle getragen wird, um eine Funktion der Aufbockeinrichtung mit Unterbrechungen zu erreichen, so daß die Wischblatteinheit mindestens einmal bei jeder vollständigen hin- und hergerichteten Bewegung des Wischerarmes von der Windschutzscheibe abgehoben wird.

10. Einrichtung nach einem der vorhergehenden Ansprüche als Teil einer Scheibenwischereinrichtung, die eine Windschutzscheibe, eine durch einen Motor hin- und herdrehbare Wischerwelle sowie einen Wischerarm umfaßt, der sich radial von der Welle weg erstreckt, gegen die Windschutzscheibe gedrückt wird und an seinem von der Welle entfernt liegenden Ende mit einer Wischblatteinheit verbunden ist.

**0 020 763**

## Fig.1.

## Fig.2.

1

_Fig.3._

14
36
32
20
34
30
26
4
37
28
6
40
16
44
8
48  46
10

_Fig.4._

20
4
6
40
10
44
48
49

_Fig.5._

_Fig.6._

_Fig.7._